# EUROPEAN PATENT APPLICATION

(11) **EP 3 854 222 A1**
(43) Date of publication of application: **28.07.2021**
(21) Application number: 19882162.1
(22) Date of filing: 30.10.2019
(51) Int. Cl.: A23K 40/10, A23K 50/40

(54) **PET FOOD**

(30) Priority: 06.11.2018 US 201862756094 P; 28.12.2018 JP 2018247858
(71) Applicant: Unicharm Corporation, Shikokuchuo-shi, Ehime 799-0111 (JP)
(72) Inventor: USUI Takahiro, Itami-shi, Hyogo 664-0831 (JP); SAKAGUCHI Tomoko, Itami-shi, Hyogo 664-0831 (JP)
(74) Representative: Dolleymores
(86) International application number: PCT/JP2019/042569
(87) International publication number: WO 2020/095791

(57) **Abstract**

A pet food including: a base material (10); and a material grain (20) fixed on a surface of the base material (10), in which the material grain (20) includes one or more selected from the group consisting of small pieces of vegetable, small pieces of fruit, small pieces of meat, small pieces of fish, small pieces of dairy product, small pieces of cereal, and small pieces of bean is provided.

## Description

### FIELD

The present invention relates to a pet food. This application claims priority based on US62/756,094 filed in the United States on November 6, 2018, and Japanese Patent Application No. 2018-247858 filed in Japan on December 28, 2018, the contents of which are incorporated herein by reference.

### BACKGROUND

A pet food can be categorized into a staple food and in-between meal snacks in a case where the feeding purposes are categorized with opportunity. The pet food as the staple food is called a "comprehensive nutritional food," which enables a pet to take necessary nutrients so long as the pet food and water are given to it. On the other hand, an "in-between meal snack" is a pet food that is intended to be given in a limited amount in a case of dog training and exercise, or as a reward. As classification according to the purposes, pet foods can be categorized into a "comprehensive nutritional food," "in-between meal snacks," "therapy diet," and a "food for other purposes" that does not fall under any of them.

In addition, as classification according to moisture contents, pet foods may be roughly categorized into a dry food with a moisture content of about 10%, a soft food with a moisture content of about 15% to 35%, and a wet food with a moisture content of about 80%.

It is important that a pet food has high palatability for pets, but it is also desired that a pet food has a high appeal to consumers who purchase a pet food. For this reason, in design of a pet food, it is required to obtain an image (healthy image) that not only palatability for pets is favorable, but also a nutritional balance is favorable, making a pet food seem to be good for health at first glance. Patent Literature 1 proposes a method for manufacturing a pet food, and a pet food obtained by this method, the method including: coating surfaces of pet food base material grains with oils and fats that are solid at room temperature; coating the pet food base material grains with a palatable material thereafter; and further dredging a powdery and granular material containing a taste component. It is thought that the above-mentioned pet food has high palatability for pets, and in addition, this pet food has an excellent appearance that sufficiently appeals to the pet owners who purchase the pet food, which turns out increasing buying motives of the pet owners and the like.

Patent Literature 2 proposes a method of adding vegetables that have been subjected to a specific drying process to a commercially available pet food, and feeding the pet food.

### [CITATION LIST]

### [PATENT LITERATURE]

Patent Literature 1: Japanese Unexamined Patent Publication No. 2010-166853
Patent Literature 2: Japanese Patent Application Laid-Open No. 2005-536207

### SUMMARY

### [TECHNICAL PROBLEM]

However, in the pet food disclosed in Patent Literature 1, because the palatable material and the powdery and granular material are a mixture, an extract, or the like, it is not clear what kind of raw material they have from the appearance of the pet food at first glance, and an appeal to consumers is not sufficient. The method of Patent Literature 2 is troublesome because it requires a process of adding a pet food to the dried vegetables and mixing them before feeding. Furthermore, because the dried vegetables are not fixed to the pet food, a pet may select and eat only the pet food and leave the dried vegetables.

The present invention has been made in view of the above circumstances, and an object of the present invention is to provide a pet food with high palatability for pets and a high appeal to consumers who purchase a pet food.

### [SOLUTION TO PROBLEM]

The present invention has the following aspects.
[1] A pet food comprising: a base material; and a material grain fixed on a surface of the base material, in which the material grain includes one or more selected from the group consisting of small pieces of vegetable, small pieces of fruit, small pieces of meat, small pieces of fish, small pieces of dairy product, small pieces of cereal, and small pieces of bean.
[2] The pet food according to [1], wherein the material grain contains 70% by mass or more of small pieces of vegetable, small pieces of fruit, small pieces of meat, or small pieces of fish with respect to a total amount of the material grain.
[3] The pet food according to [1], wherein the material grain is any one of small pieces of vegetable, small pieces of fruit, small pieces of meat, or small pieces of fish.
[4] The pet food according to [1], wherein the material grain is small pieces of freeze-dried vegetable, a steamed product of small pieces of freeze-dried vegetable, or a baked product of small pieces of freeze-dried vegetable.
[5] The pet food according to any one of [1] to [4], wherein the base material has a plate shape.

### [ADVANTAGEOUS EFFECT OF THE INVENTION]

According to the present invention, it is possible to obtain a pet food with high palatability for pets and a high appeal to consumers who purchase a pet food.

### BRIEF DESCRIPTION OF DRAWINGS

[Fig. 1]

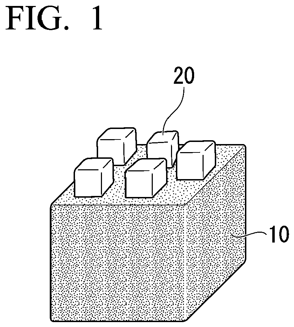

Fig. 1 is a schematic view showing an example of a pet food according to the present embodiment.

### DESCRIPTION OF EMBODIMENTS

In the present specification, the term "pet" refers to an animal raised by a person. In a narrower sense, pets are animals that are kept and loved by their owners. In addition, the term "pet food" refers to feed for pets. A pet food according to the present invention can be sold as an "animal feed" or "animal food."

In the present specification, "palatability" is an index of whether or not a pet food is preferred and eaten by a pet, and is caused by mouthfeel, taste, odor, and the like. In the present specification, a case in which "coating" of a powder is performed means that the powder is applied to surfaces of grains to be dredged to the surfaces of the grains. In the present specification, a case in which "coating" of a liquid is performed means that the liquid is applied to surfaces of grains to be dredged to the surfaces of the grains, and the case also includes a case in which the grains are impregnated with some or whole of the applied liquid. For example, a case in which "coating" of oils and fats is performed means that the oils and fats are applied to surfaces of grains to be dredged to the grains, and the case also includes a case in which the grains are impregnated (soaked) with some or whole of the applied oils and fats.

In the present specification, a value of a moisture content is a value obtained by an atmospheric heating and drying method. In the atmospheric heating and drying method, a subject to be measured is pulverized in a pulverizer by passing the subject through a 1 mm sieve. Then the pulverized subject is used as an analysis sample, and 2 to 5 g of the analysis sample is accurately weighed and placed in an aluminum weighing dish. After the analysis sample is dried at 135°C for 2 hours and cooled in a desiccator, a weight of the analysis sample is accurately weighed again, so that moisture content is obtained from the weight difference in the analytical sample before and after drying. More specifically, the subject to be measured is pulverized by a pulverizer such that the subject passes through a 1 mm sieve, and this pulverized product is used as an analysis sample. A mass (W1 gram) of an aluminum weighing can is measured in advance as a constant value. The analysis sample is placed in this aluminum weighing can, and a mass (W2 gram) is weighed. The analysis sample is then dried at 135°C for 2 hours using a forced circulation type hot air dryer. After allowing the analysis sample to cool in a dry atmosphere (in a silica gel desiccator), a mass (W3 gram) is weighed. From each mass obtained, a moisture content of the analysis sample is obtained using the following formula. Moisture content (unit: mass%) of analysis sample = (W2 - W3)/(W2 - W1) × 100A moisture content is a value measured immediately after opening a final product within 30 days from a date of manufacture, or a value measured under the same conditions as above.

In the present specification, a particle diameter of a grain means a diameter when a shape of the grain is spherical, and means a longest diameter when a shape of the grain is other than spherical (cylindrical, polygonal columnar, plate-like, and the like).

### (Pet food)

A pet food according to the present embodiment is a pet food including: a base material; and a material grain fixed on a surface of the base material, in which the material grain includes one or more selected from the group consisting of small pieces of vegetable, small pieces of fruit, small pieces of meat, small pieces of fish, small pieces of dairy product, small pieces of cereal, and small pieces of bean. More specifically, the pet food according to the present embodiment is a pet food including: a base material; and a material grain protruding from an outer surface of the base material and fixed on an outer surface of the base material, in which the material grain includes one or more selected from the group consisting of small pieces of vegetable, small pieces of fruit, small pieces of meat, small pieces of fish, small pieces of dairy product, small pieces of cereal, and small pieces of bean. In the pet food according to the present embodiment, the material grain including one or more selected from the group consisting of small pieces of vegetable, small pieces of fruit, small pieces of meat, small pieces of fish, small pieces of dairy product, small pieces of cereal, and small pieces of bean is fixed on the base material, and therefore, the pet food has high palatability for pets and has a high appeal to consumers who purchase a pet food.

Fig. 1 is a schematic view showing an example of the pet food according to the present embodiment. As shown in Fig. 1, material grains 20 are fixed on a surface of a base material 10. The material grains 20 protrude from an outer surface of the base material 10 and are fixed on the outer surface of the base material 10. In the example shown in Fig. 1, the material grains 20 are fixed on only one surface of the base material 10. However, in the present embodiment, the material grains 20 may be fixed on a plurality of surfaces of the base material 10, or may be fixed on all surfaces of the base material 10. Among the cases, the material grains 20 are preferably fixed on only one surface of the base material 10 from the viewpoint of improving an appeal to consumers who purchase a pet food.

A case in which material grains are fixed on a surface of the base material is referred to, it means that the material grains adhere to the base material by an arbitrary method, and the material grains do not easily fall off from the base material. In addition, the case in which the material grains do not easily fall off from the base material is referred to, it means, for example, a case in which a force is 2N or more, the force being applied until the material grains are peeled off from the base material by vertically applying a force only to the material grains using a compact table-top universal testing machine (trade name "EZ test EZ-SX," manufactured by Shimadzu Corporation) while holding the pet food such that a surface of the base material on which the material grains are fixed is disposed in a vertical direction.

The number of material grains fixed on a surface of the base material is not particularly limited, but it is preferably two or more and is more preferably three or more from the viewpoint of improving palatability for pets and an appeal to consumers. In a case where a plurality kinds of material grains are fixed on the surface of the base material, it is sufficient for at least one of material grains be a material grain including one or more selected from the group consisting of small pieces of vegetable, small pieces of fruit, small pieces of meat, small pieces of fish, small pieces of dairy product, small pieces of cereal, and small pieces of bean.

A method of fixing material grains on the base material is not particularly limited, and examples thereof include a method of fixing using a liquid raw material such as oils and fats, a method of fixing using a gelling agent or emulsifier, and the like. Examples of the gelling agent include gelatin, agar, carrageenan, pectin, locust bean gum, xanthan gum, guar gum, gum arabic, taraya gum, karaya gum, alginic acid, tara gum, starch, and the like. Examples of the emulsifier include glycerin fatty acid ester and the like.

Among the methods, the method of fixing material grains on the base material is preferably the method of fixing using a gelling agent from the viewpoint that then, material grains can be sufficiently fixed on the base material. That is, the pet food according to the present embodiment is preferably a pet food including a base material, and material grains fixed on a surface of the base material by a gelling agent. The case in which material grains are fixed by a gelling agent includes any of a case (a) in which material grains are fixed by coating a base material with a gelling agent and dredging material grains thereto, a case (b) in which material grains are fixed by coating a base material and material grains with a gelling agent, and a case (c) in which material grains are fixed by incorporating a gelling agent into a base material or material grains.

The pet food in the present embodiment is preferably an in-between meal snack (snack). Furthermore, from the viewpoint of improving palatability, the pet food in the present embodiment is preferably a baked food or steamed food (hereinafter also referred to as steamed food or the like), and is more preferably a steamed food. The case in which the pet food is a steamed food or the like includes any of a case in which a base material and material grains are manufactured using a raw material in a steamed or baked state, and a case in which a base material and material grains are respectively manufactured using an uncooked raw material and steamed or baked in a subsequent manufacturing process, and thereby a finally obtained pet food (the base material and the material grains) becomes a steamed food or the like.

Hereinafter, each of the components contained in the pet food according to the present embodiment will be described in detail.

### <Base material>

As a raw material for a base material constituting the base material in the present embodiment, it is possible to use a powder raw material or a liquid raw material known in manufacturing of pet food. Specific examples of powder raw materials include cereals (corn, wheat, wheat flour, wheat bran, rice, bread crumbs, barley, oat, rye, and the like), potatoes (sweet potatoes, potatoes, and the like), beans (whole soybeans and the like), starches (wheat starch, corn starch, rice starch, potato starch, tapioca starch, sweet potato starch, sago starch, modified starch, and the like), vegetable proteins (corn gluten meal, wheat protein, bean protein, rice protein, potato protein, and the like), meat (meat of domesticated or wild animals such as cows, pigs, sheep, deer, and rabbits; meat of fowl such as chickens, turkeys, quails, and domestic poultry; meal (chicken meal, pork meal, beef meal, mixed meal of these); and the like), fish and seafood (fishes such as tuna, bonito, and horse mackerel; crustaceans such as shrimp and crab; mollusks such as octopus and squid; shellfishes such as scallops and turban shells; fish extracts; Katsuobushi (dried bonito flakes); meal (fish meal); and the like), vegetables, nuts and seeds, mushrooms, eggs, sugars, milk, additives (vitamins, minerals, amino acids, flavor ingredients, powdery palatability enhancers, fibers, colorants, phosphates, pH adjusters, seasonings, antioxidants, trehalose, and the like), and the like. Meal means a powder obtained by compressing and finely crushing meat or fish and seafood. More specific examples of powdery palatability enhancers include animal raw material extracts, plant raw material extracts, yeast extracts, dried products of yeast, and the like. Specific examples of liquid raw materials (including semi-solid raw materials) include water, oils and fats (animal oils and fats such as chicken oil (chicken oil), pork fat (lard), beef fat (tallow), milk fat, and fish oil; and vegetable oils and fats such as olive oil, cacao oil, palm oil, palm kernel oil, coconut oil, palm oil, and camellia oil), liquid palatability enhancers, liquid sugars, moisturizers, preservatives, emulsifiers, flavorants, colorants, and the like.

Among the above examples, a raw material for a base material constituting the base material is preferable a mixture of (a) meat (meat of domesticated or wild animals such as cows, pigs, sheep, deer, and rabbits; meat of fowl such as chickens, turkeys, quails, and domestic poultry; meal (chicken meal, pork meal, beef meal, mixed meal of these); and the like), (b) cereals (corn, wheat, wheat bran, rice, bread crumbs, barley, oat, rye, and the like), (c) moisturizers (glycerin, sugar alcohol, and the like), (d) oils and fats (animal oils and fats such as chicken oil (chicken oil), pork fat (lard), beef fat (tallow), milk fat, and fish oil; and vegetable oils and fats such as olive oil, cacao oil, palm oil, palm kernel oil, coconut oil, palm oil, and camellia oil), and (e) additives (vitamins, minerals, amino acids, flavor ingredients, powdery palatability enhancers, fibers, colorants, phosphates, pH adjusters, seasonings, antioxidants, and the like).

Among the above examples, the (a) meat is preferably chicken meat, is more preferably chicken breast fillets, chicken bones for broth, or chicken livers, and is even more preferably chicken breast fillets.

A content of the (a) meat is preferably 10% to 50% by mass, is more preferably 20% to 50% by mass, and is even more preferably 30% to 50% by mass, with respect to a total amount of the base material. When a content of the (a) meat is within the above range, palatability is further improved.

A blending example for the base material in the case of in-between meal snacks is shown below. (Blending example for base material)Chicken meat: 0% to 60%, wheat flour: 0% to 80%, moisturizer: 1% to 30%, animal oils and fats: 0% to 10%, and additive: 0% to 10%

A suitable blending example (including external additives) for the base material in the case of in-between meal snacks is shown below. Chicken breast fillet: 30% to 40%, wheat flour: 5% to 20%, moisturizer: 15% to 30%, animal oils and fats: 1% to 6%, and additive: 0% to 10%

A shape of the base material in the present embodiment may be any shape suitable for pets to eat, and is not particularly limited. For example, it possible to apply any shape such as spherical, ellipsoidal (go-stone-like), donut-like, pellet-like, cylindrical, polygonal, plate-like, clover-like, heart-like, star-like, and cross-like shapes. Among them, from the viewpoint of an appeal to consumers, a shape is preferably polygonal or plate-like, and is more preferably plate-like.

Regarding a size of the base material, the base material may be in a small grain form that a pet can chew with a bite, or may be in a large grain form that a pet can bite multiple times. A longest diameter of the base material is preferably 5 to 200 mm, is more preferably 10 to 150 mm, and is even more preferably 10 to 100 mm. Furthermore, a shortest diameter of the base material is preferably 1 to 100 mm, is more preferably 1 to 50 mm, and is even more preferably 5 to 25 mm. When a size of the base material is within the above range, an appeal to consumers is further improved.

A moisture content of the base material according to the present embodiment is preferably 5% to 40% by mass, is more preferably 10% to 35% by mass, and is even more preferably 15% to 30% by mass. When a moisture content is within the above range, sufficient palatability can be obtained.

### <Material grain >

A raw material for the material grains in the present embodiment includes one or more selected from the group consisting of small pieces of vegetable, small pieces of fruit, small pieces of meat, small pieces of fish, small pieces of dairy product, small pieces of cereal, and small pieces of bean.

### «Small pieces of vegetable»

Examples of small pieces of vegetable include sweet potatoes, pumpkins, carrots, kidney beans, tomatoes, broccolis, asparaguses, and the like. Among the above examples, sweet potatoes, pumpkins, carrots, and kidney beans are preferable from the viewpoint of an appeal to consumers. Furthermore, a raw material for small pieces of vegetable may be raw or dried (air-dried), but it is preferably freeze-dried. Small pieces of freeze-dried vegetable can be dried while keeping their shapes, and this makes it easier to give consumers a healthier image.

### «Small pieces of fruit»

Examples of small pieces of fruit include apples, tomatoes, bananas, pears, strawberries, cranberries, blueberries, raspberries, and the like. Among the above examples, apples, bananas, and strawberries are preferable from the viewpoint of an appeal to consumers. Furthermore, a raw material for small pieces of fruit may be raw or dried, but it is preferably freeze-dried. Small pieces of freeze-dried fruit can be dried while keeping their shapes, and this makes it easier to give consumers a healthier image.

### «Small pieces of meat»

Examples of small pieces of meat includes meat of domesticated or wild animals such as cows, pigs, sheep, deer, and rabbits; meat of fowl such as chickens, turkeys, quails, and domestic poultry; (chicken meal, pork meal, beef meal, mixed meal of these); and the like. Among the above examples, beef meat, pork meat, and chicken meat are preferable from the viewpoint of an appeal to consumers. Examples of meat also include enzymatically decomposed meat that is generally used as a palatability enhancer, but enzymatically decomposed meat is not included in the examples of meat from the viewpoint of an appeal to consumers.

### «Small pieces of fish»

Examples of small pieces of fish include fish meat, meal (fish meal), shellfishes, Kamaboko (boiled fish paste), Katsuobushi (dried bonito flakes), and the like. Among the above examples, fish meat and Kamaboko (boiled fish paste) are preferable from the viewpoint of an appeal to consumers.

### «Small pieces of dairy product»

Examples of small pieces of dairy product include cheese, butter, yogurt, milk, milk powder, and the like. Among the above examples, cheese or the like is preferable from the viewpoint of an appeal to consumers. Furthermore, a raw material for small pieces of dairy product is preferably freeze-dried.

### «Small pieces of cereal»

Examples of small pieces of cereal include corn, wheat, wheat flour, wheat bran, rice, bread crumbs, barley, oat, rye, and the like.

### «Small pieces of bean»

Examples of small pieces of bean include whole soybeans, processed soybeans, lentil beans, red beans, chickpeas, peas, and the like.

Among the above examples, a material grain more preferable includes small pieces of vegetables from the viewpoint of a healthy image. In addition, in order to appeal a healthy impression to consumers at first glance, with respect to 100% by mass as a total amount of material grains, it is preferable that small pieces of vegetable, small pieces of fruit, small pieces of meat, small pieces of fish, small pieces of dairy product, small pieces of cereal, or small pieces of bean be contained in an amount of 70% by mass or more; it is more preferable that small pieces of vegetable, small pieces of fruit, small pieces of meat, or small pieces of fish be contained in an amount of 70% by mass or more; it is even more preferable that small pieces of vegetable be contained in an amount of 70% by mass or more; and it is particularly preferable that small pieces of vegetable be contained in an amount of 80% by mass or more.

In addition, in order to appeal a healthy impression to consumers at first glance, a material grain is preferably any one of small pieces of vegetable, small pieces of fruit, small pieces of meat, small pieces of fish, small pieces of dairy product, small pieces of cereal, or small pieces of bean; a material grain is more preferably any one of small pieces of vegetable, small pieces of fruit, small pieces of meat, or small pieces of fish; and a material grain is even more preferably small pieces of vegetable.

Furthermore, in order to further appeal a healthy impression to consumers at first glance, with respect to 100% by mass as a total amount of material grains, it is preferable that one kind of a raw material in small pieces of vegetable, small pieces of fruit, small pieces of meat, small pieces of fish, small pieces of dairy product, small pieces of cereal, or small pieces of bean be contained in an amount of 70% by mass or more; it is more preferable that one kind of a raw material in small pieces of vegetable, small pieces of fruit, small pieces of meat, small pieces of fish, or small pieces of dairy product be contained in an amount of 70% by mass or more; it is even more preferable that one kind of a raw material in small pieces of vegetable be contained in an amount of 70% by mass or more; and it is particularly preferable that one kind of a raw material in small pieces of vegetable be contained in an amount of 80% by mass or more. In a case where one kind of a raw material in small pieces of vegetable is contained in an amount of 80% by mass or more, it means that, for example, pumpkin as a material grain is contained in an amount of 80% by mass or more with respect to 100% by mass as a total amount of material grains.

A particle diameter of a material grain is not particularly limited, but it is preferably 0.5 to 20 mm, is more preferably 1 to 20 mm, and is even more preferably 1 to 10 mm. In a case where a size of a material grain is within the above range, it is easier to appeal a healthy image to consumers.

A particle diameter of a material grain can be measured by, for example, a caliper, a micrometer, an image analysis, or the like.

### (Method for manufacturing pet food)

As a method for manufacturing the pet food of the present embodiment, it is possible to use, for example, a known method to be described later.

### [Base material production process]

A base material production process is a process of kneading a mixture of raw materials for a base material to produce a base material by extrusion molding. As the base material production process, the following is specifically performed: a raw material for a base material is put into a kneading extruder and kneaded at a temperature of -5°C to 25°C, water or ice is added thereto until a moisture content reaches 30% or more, extrusion molding is performed after the adjustment, and thereby a base material is produced.

### [Material grain fixing process]

A material grain fixing process is a process of fixing the base material obtained by the above-described [Base material production process] with material grains.

Examples of methods of fixing a base material and material grains include a method of coating a base material with a liquid raw material such as oils and fats and fixing material grains thereto, a method of coating a base material with a gelling agent or emulsifier and fixing material grains thereto, and the like. Furthermore, in the above-mentioned methods, a base material and material grains may be fixed by dredging the material grains to the base material, and coating them with a liquid raw material such as oils and fats, or coating them with a gelling agent or emulsifier. As a specific example of the material grain fixing process, the following is performed: a gelling agent or emulsifier is dredged to a base material flowing on a belt conveyor so that the base material is coated therewith, material grains filled in a hopper are dropped so that the material grains are dredged to the base material coated with the gelling agent or emulsifier, and thereby the base material and the material grains are fixed.

### [Heating process]

A heating process is a process of heating a base material and material grains fixed by the above-described [Material grain fixing process] (hereinafter, referred to as the base material and the material grains). In the heating process, the base material and the material grains may be heated by firing, or the base material and the material grains may be heated by steaming.

In a case of firing the base material and the material grains, a heating temperature (firing temperature) for the base material and the material grains is preferably 80°C to 140°C, and is more preferably 90°C to 120°C. Furthermore, a heating time (firing time) for the base material and the material grains is preferably 20 to 60 minutes, is more preferably 25 to 50 minutes, and is even more preferably 30 to 45 minutes.

In a case of steaming the base material and the material grains, it is preferable to perform steaming with water vapor at 85°C to 105°C for 3 to 10 minutes.

### [Arbitrary process]

The method for manufacturing the pet food of the present embodiment may include processes other than the above-described processes, and examples thereof include «water spraying process» and «drying process».

### «Water spraying process»

The water spraying process is a process of coating the base material (and the material grains) with a gelling agent or emulsifier, and then spraying water thereon in a case where a gelling agent or emulsifier is used in the above-described [Material grain fixing process]. The base material (and the material grains) can be sufficiently coated with the gelling agent or emulsifier by spraying water on the gelling agent or emulsifier, and thereby the base material and the material grains can be sufficiently fixed.

### «Drying process»

The drying process is a process of drying the base material and the material grains to obtain a desired moisture content thereof after the above-described [Heating process]. Examples of methods of drying the base material and the material grains include known methods such as a method of drying naturally, a method of drying by blowing warm air, a method of drying by decompressing, and a method of drying by freeze-drying.

A temperature of warm air is preferably 50°C to 80°C in a case of drying by blowing warm air. A drying time is preferably 30 to 300 minutes in a case of drying in this temperature range. EXAMPLES

Hereinafter, the present invention will be described in more detail with reference to examples, but the present invention is not limited to these examples.

### <Example 1>

### [Base material production process]

A raw material for a base material in a formulation shown in Table 1 was put into a kneading extruder, and was kneaded at a temperature of 20°C. A moisture content was adjusted so that it reached 30% or more, and extrusion molding was performed after the adjustment. Thereby, a base material was produced.

### [Material grain fixing process]

The base material was coated with a gelling agent, and a freeze-dried pumpkin as material grains was fixed on the base material.

### [Steaming process]

The fixed base material and material grains were steamed with water vapor at 90°C for 5 minutes.

### [Drying process]

The fixed base material and material grains were dried so that a moisture content of the base material reached about 30%, and thereby pieces of a pet food of Example 1 was produced.

**[Table 1]**

| | Example 1 |
|---|---|
| Chicken breast fillet | 40 |
| Wheat flour | 20 |
| Moisturizer | 30 |
| Animal oils and fats | 5 |
| Additive | 5 |
| Total (% by mass) | 100 |

### [Evaluation of adhesion strength between base material and material grains]

A force (N) was measured, the force being applied until the material grains were peeled off from the base material by vertically applying a force only to the material grains using a compact table-top universal testing machine (trade name "EZ test EZ-SX," manufactured by Shimadzu Corporation) while holding pieces of the pet food of Example 1 such that a surface of the base material on which the material grains were fixed was disposed in a vertical direction. The results are shown in Table 2.

### [Evaluation of appearance of pet food]

A pet food in which material grains were not fixed on the same base material as that of Example 1 was prepared as Comparative Example 1. The pet food of Example 1 was compared with the pet food of Comparative Example 1 to conduct a questionnaire with questions regarding "which pet food do you think a nutritional balance is better" and "which pet food do you think an appearance is fancier" (number of monitors: 64 people). Among a total number of answers to the above question, a rate of people, who answered the pet food of Example 1 rather than the pet food of Comparative Example 1 is the one that "I think a nutritional balance is better" and "I think an appearance is fancier," was calculated at a percentage (unit: %). The results are shown in Table 3.

**[Table 2]**

| | Adhesion strength (N) |
|---|---|
| Example 1 | 3.13 |

**[Table 3]**

| Invention of present application | Comparison target | Rate of people who thought and selected Example 1 as pet food with better nutritional balance | Rate of people who thought and selected Example 1 as pet food with fancier appearance |
|---|---|---|---|
| Example 1 | Comparative Example 1 | 67% | 81% |

It could be confirmed that it was possible to produce a pet food as shown in Fig. 1 including a base material, and a material grain fixed on a surface of the base material, as shown in Table 2.

As shown in Table 3, as compared to the pet food of Comparative Example 1, the pet food of Example 1 in which material grains were fixed on the surface of the base material was evaluated as a pet food that people thought a nutritional balance would be better, which made a good impression that it would be healthy, and that people thought an appearance was fancier.

According to the present invention, it is possible to obtain a pet food with high palatability for pets and a high appeal to consumers who purchase a pet food.

Although preferable examples of the present invention have been described above, the present invention is not limited to these examples. Configurations can be added, omitted, and replaced, and other modifications can be made within a range not departing from the spirit of the present invention. The present invention is not limited by the above descriptions, but only by the scope of the appended claims.

### REFERENCE SIGNS LIST

10 Base material
20 Material grain

## Claims

1. A pet food comprising:
a base material; and
a material grain fixed on a surface of the base material,
wherein the material grain includes one or more selected from the group consisting of small pieces of vegetable, small pieces of fruit, small pieces of meat, small pieces of fish, small pieces of dairy product, small pieces of cereal, and small pieces of bean.

2. The pet food according to claim 1,
wherein the material grain contains 70% by mass or more of small pieces of vegetable, small pieces of fruit, small pieces of meat, or small pieces of fish with respect to a total amount of the material grain.

3. The pet food according to claim 1,
wherein the material grain is any one of small pieces of vegetable, small pieces of fruit, small pieces of meat, or small pieces of fish.

4. The pet food according to claim 1,
wherein the material grain is small pieces of freeze-dried vegetable, a steamed product of small pieces of freeze-dried vegetable, or a baked product of small pieces of freeze-dried vegetable.

5. The pet food according to any one of claims 1 to 4,
wherein the base material has a plate shape.
